# EUROPEAN PATENT SPECIFICATION

(11) **EP 2 037 516 B1**
(45) Date of publication and mention of the grant of the patent: **28.12.2011**
(21) Application number: 08253024.7
(22) Date of filing: 12.09.2008
(51) Int. Cl.: H01M 4/58

(54) **Lithium battery and method for fabricating anode thereof**
Lithiumbatterie und Verfahren zur Herstellung einer Anode dafür
Batterie au lithium et son procédé de fabrication

(30) Priority: 14.09.2007 CN 200710077110; 10.10.2007 CN 200710123814; 10.10.2007 CN 200710123815
(43) Date of publication of application: 18.03.2009
(73) Proprietor: Hong Fu Jin Precision Industry (ShenZhen) Co., Ltd., Longhua Town, Bao'an District Shenzhen City Guangdong 518109 (CN); Tsinghua University, Haidian District, Beijing 100084 (CN)
(72) Inventor: Feng, Chen, c/o Tsing Hua University, Haidian District, Beijing City (CN); Zhang, Hao-Xu, c/o Tsing Hua University, Haidian District, Beijing City (CN); Jiang, Kai-Li, c/o Tsing Hua University, Haidian District, Beijing City (CN); Fan, Shou-Shan, c/o Tsing Hua University, Haidian District, Beijing City (CN); Liu, Chang-Hong, c/o Tsing Hua University, Haidian District, Beijing City (CN)
(74) Representative: Gray, John James

(56) References cited:
- WO-A-2007/069562
- JP-A- 2004 319 186
- US-A1- 2007 190 422
- US-B1- 7 094 499

## Description

### 1. Field of the Invention

The present invention relates to a lithium battery, and a method for fabricating an anode of the lithium battery.

### 2. Discussion of Related Art

In recent years, lithium batteries have received a great deal of attention and are used in various portable devices, such as notebook PCs, mobile phones and digital cameras for their small weight, high discharge voltage, long cyclic life and high energy density compared with conventional lead storage batteries, nickel-cadmium batteries, nickel-hydrogen batteries, and nickel-zinc batteries.

A lithium battery generally includes a cathode, an anode, electrolyte, a separator used to separate the anode from the cathode, and a container having the anode, the cathode, electrolyte, and the separator disposed therein.

An anode of a lithium battery should have such properties as high energy density; low open-circuit voltage versus metallic lithium electrodes; high capacity retention; good performance in common electrolytes; high density (e.g. >2.0g/cm³); good stability during charge and discharge processes, and low cost. At present, the most widely used anode active material is carbonous/carbonaceous material such as natural graphite, artificial graphite and amorphous-based carbon. Amorphous-based carbon has excellent capacity, but the irreversibility thereof is relatively high. The theoretical maximum capacity of natural graphite is 372 mAh/g, but the lifetime thereof is generally short.

In general, carbonous/carbonaceous material anode has low efficiency and cycle performance in the first charge and discharge cycle due to the formation of Solid Electrolyte Interface (SEI) layer. A stable SEI layer is essential in the lithium battery to prevent anode material from reacting with the electrolyte, therefore, the selection of the electrolyte is limited. Only the electrolytes in which a stable SEI layer can be formed are suitable for using in a lithium battery.

Carbon nanotubes are a novel carbonous/carbonaceous material formed by one or more layers of graphite. A distance between two layers of graphite in the carbon nanotube is about 0.34 nanometers, which is greater than the distance between two layers in natural graphite. Thus, carbon nanotube is a suitable material for using as the anode of the lithium battery. However, until now, carbon nanotubes are mixed with a binder and disposed on a current collector of the anode. As such, adsorption ability of the carbon nanotubes is restricted by the binder mixed therewith.

A cathode of a lithium battery should have such properties as high energy density; high open-circuit voltage versus metallic lithium electrode; high capacity retention; good performance in common electrolytes; high density; good stability during charge and discharge processes, and low cost. Among various active materials, transition metal oxides and mixed transition metal oxides have received much attention owing to their relatively high charge/discharge capacities in the lithium batteries. At present, the most widely used cathode active materials are spinel type lithium manganese oxide (e.g. LiMn₂O₄), olivine type lithium iron phosphate (e.g. LiFePO₄), and layered type lithium cobalt oxide (e.g. LiCoO₂).

However, the low conductivity of the active materials generally induces a relatively large resistance in the cathode. As such, the charge/discharge depth of the lithium battery is relatively low. To decrease the resistance of the cathode, a conducting additive is commonly mixed with the active material. The weight of the conducting additive can reach to about 15% ~ 30% of the total weight of the cathode. If the conducting additive is increased and the weight of the battery must remain the same, the amount of active material in the cathode must be reduced, and thus, the energy density of the lithium battery will suffer.

To solve the above-described problem, carbon nanotubes as a novel conducting additive has been tested in cathodes of lithium batteries to take advantage of the excellent conductive properties thereof. In prior art, carbon nanotube powder is mixed with the active material by ultrasonically agitating. Unfortunately, carbon nanotubes are prone to aggregation due to the extremely large specific surface area thereof, and as such, aggregated carbon nanotubes will not improve the conductivity of the cathode.

What is needed, therefore, is to provide a lithium battery having an anode with good adsorption ability, a lithium battery having a cathode with good conductivity, and a method for fabricating the anode of the lithium battery, and, in which the above problems are eliminated or at least alleviated.

### SUMMARY

Thus viewed from one aspect the present invention provides a lithium battery, comprising:
an anode comprising a carbon nanotube film structure comprising at least two
overlapped carbon nanotube films, wherein each carbon nanotube film comprises a plurality of successive carbon nanotubes joined end to end and aligned along a same direction;
a cathode;
a separator used to separate the anode from the cathode;
a container having the anode, the cathode, and the separator disposed therein; and
an electrolyte filled in the container.
Viewed from a further aspect the present invention provides a lithium battery, comprising: an anode;
a cathode comprising a carbon nanotube film structure comprising at least two overlapped carbon nanotube films, and a plurality of active material particles dispersed in the carbon nanotube film structure, wherein each carbon nanotube film comprises a plurality of successive carbon nanotubes joined end to end and aligned along a same direction;
a separator used to separate the anode from the cathode;
a container having the anode, the cathode, and the separator disposed therein; and an electrolyte filled in the container.
Viewed from a yet further aspect the present invention provides a method for fabricating an anode of a lithium battery, the method comprising the steps of:
(a) providing an array of carbon nanotubes;
(b) making a carbon nanotube film structure comprising at least two overlapped carbon nanotube films, wherein each carbon nanotube film comprises a plurality of successive carbon nanotubes joined end to end and aligned along a same direction;
(c) providing a negative current collector; and
(d) disposing a carbon nanotube film structure on the current collector, and thereby, achieving the anode of lithium battery.

Other advantages and novel features of the present lithium battery, the related method for fabricating the anode of the present lithium battery, will become more apparent from the following detailed description of preferred embodiments when taken in conjunction with the accompanying drawings.

### BRIEF DESCRIPTION OF THE DRAWINGS

Many aspects of the present lithium battery, the related method for fabricating the anode of the lithium battery can be better understood with reference to the following drawings. The components in the drawings are not necessarily to scale, the emphasis instead being placed upon clearly illustrating the principles of the present lithium battery and the related method for fabricating the anode of the lithium battery, and a lithium battery using the same.

FIG 1 is a schematic view of an anode of a lithium battery, in accordance with a present embodiment.

FIG 2 shows a Scanning Electron Microscope (SEM) image of an carbon nanotube film in the anode of the lithium battery in accordance with a present embodiment.

FIG 3 shows a Scanning Electron Microscope (SEM) image of an ordered carbon nanotube film in the anode in accordance with a present embodiment.

FIG 4 shows a photo of a carbon nanotube film with a predetermined shape in the anode of the lithium battery of FIG 1.

FIG 5 shows a Scanning Electron Microscope (SEM) image of a carbon nanotube film structure, in accordance with the present embodiment.

FIG 6 shows a schematic view of a composite film, in accordance with the carbon nanotube structure of the anode of a lithium battery.

FIG 7 is a flow chart of a method for fabricating the anode of the lithium battery in accordance with a present embodiment.

FIG 8 shows a photo of a carbon nanotube floccule structure in the anode of the lithium battery of FIG. 1.

FIG. 9 is a schematic view of a cathode of a lithium battery, in accordance with a present embodiment.

FIG 10 is a schematic view of a second carbon nanotube structure used in the cathode of the lithium battery of FIG. 9.

FIG 11 is a flow chart of a method for fabricating the cathode of the lithium battery in accordance with a present embodiment.

FIG 12 is a schematic view a lithium battery, in accordance with the present embodiment.

Corresponding reference characters indicate corresponding parts throughout the several views. The exemplifications set out herein illustrate at least one preferred embodiment of the present lithium battery and the related method for fabricating the anode of the same, in at least one form, and such exemplifications are not to be construed as limiting the scope of the invention in any manner.

### DETAILED DESCRIPTION OF PREFERRED EMBODIMENTS

Reference will now be made to the drawings to describe, in detail, embodiments of the present lithium battery and related method for fabricating the anode of the same.

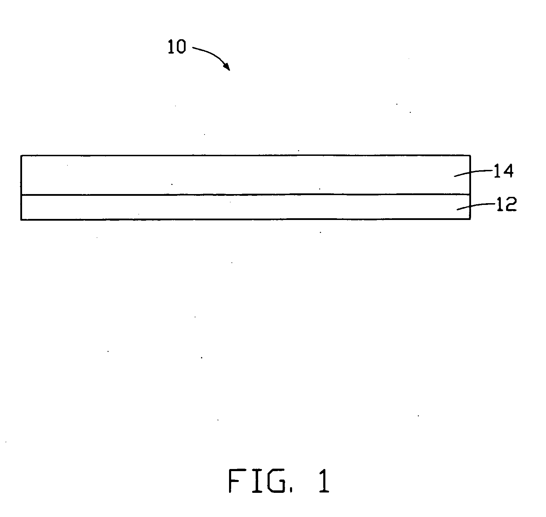

Referring to FIG 1, an anode 10 of a lithium battery in the present embodiment includes a negative current collector 12 and a first carbon nanotube structure 14 supported by the negative current collector 12. The first carbon nanotube structure 14 includes at least one carbon nanotube film. The negative current collector 12 can, beneficially, be a metal substrate. Quite suitably, the metal substrate is copper sheet. The first carbon nanotube structure 14 can, advantageously, be directly disposed on a surface of the negative current collector 12. More specifically, the first carbon nanotube structure 14 can be formed on the surface of the negative current collector 12 directly, or can be made to adhere to the surface of the negative current collector 12 by a binder.

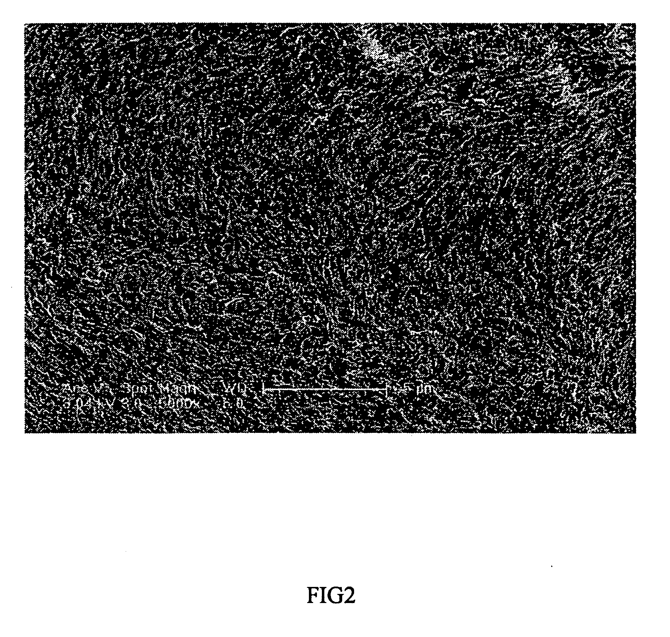

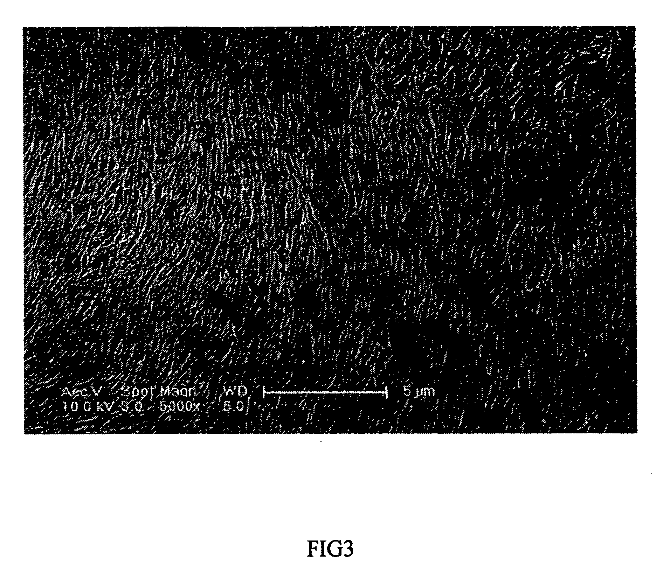

Referring to FIG 2 and FIG 3, the first carbon nanotube structure 14 can be a free-standing carbon nanotube film. Further, the carbon nanotubes are substantially parallel to a surface of the first carbon nanotube structure 14. The carbon nanotubes are selected from the group consisting of the carbon nanotubes isotropically arranged, arranged along a certain direction, or arranged along different directions. The adjacent carbon nanotubes are combined and attracted by van der Waals attractive force, thereby forming a free-standing structure. As such, the first carbon nanotube structure 14 has good tensile strength, and can, advantageously, be formed into most any desired shape of the anode. The first carbon nanotube structure 14 includes a plurality of micropores. A diameter of the micropores is less than 1 micron. As such, a specific area of the first carbon nanotube structure 14 is extremely large. Thus, when the first carbon nanotube structure 14 is used in the lithium battery anode, the intercalation amount of lithium ions can be enhanced and the stability of an SEI layer formed in the first charge/discharge cycle can be improved by the special microporous structure of the first carbon nanotube structure 14.

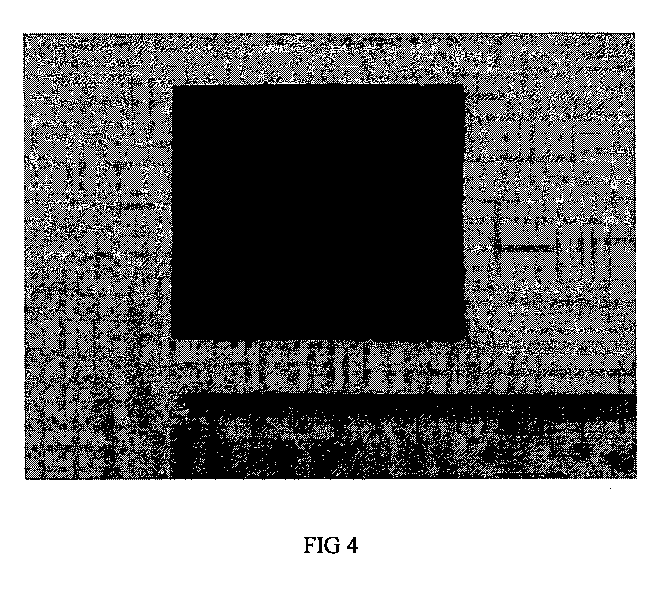

Referring to FIG 4, the first carbon nanotube structure 14 can be a carbon nanotube film with a plurality of carbon nanotubes isotropic and uniformly arranged, disordered, and are entangled together. The first carbon nanotube structure 14 includes a plurality of micropores formed by the disordered carbon nanotubes. A diameter of the micropores is less than 100 microns. As such, a specific area of the first carbon nanotube structure 14 is extremely large. Thus, when the first carbon nanotube structure 14 is used in the lithium battery anode, the intercalation amount of lithium ions can be enhanced and the stability of an SE1 layer formed in the first charge/discharge cycle can be improved by the special microporous structure of the first carbon nanotube structure 14.

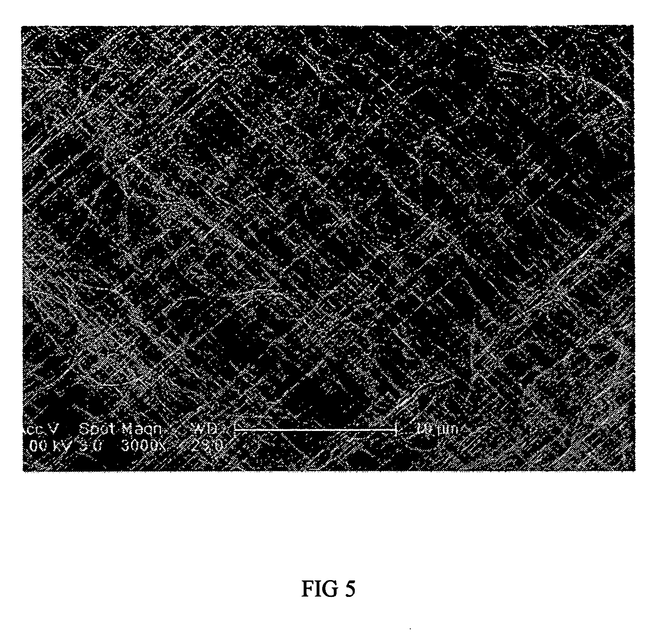

Referring to FIG. 5, the first carbon nanotube structure 14 includes at least one carbon nanotube film. The carbon nanotube film includes a plurality of successive carbon nanotubes joined end to end and aligned along the same direction. When the first carbon nanotube structure includes a plurality of carbon nanotube films, the layers carbon of carbon nanotube film cross and overlap with each other. The angle between the aligned directions of two adjacent layers is arbitrary.

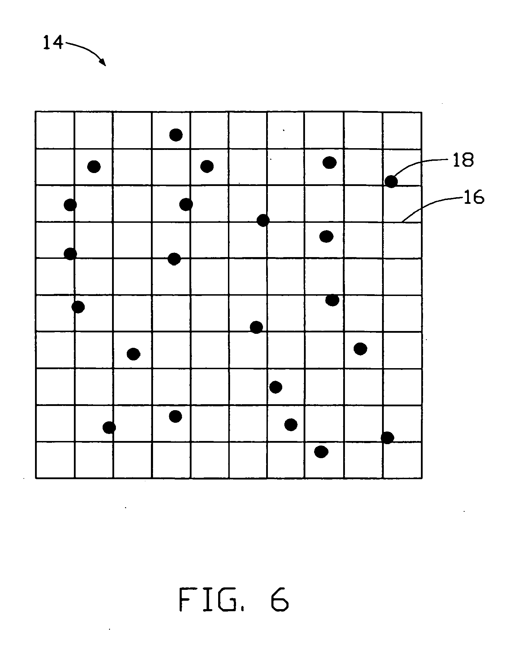

Refering to FIG 6, the first carbon nanotube structure 14 can be a composite film. The composite film includes a carbon nanotube film structure 16 and a plurality of nanoscale tin oxide particles 18 dispersed in the carbon nanotube film structure 16. The carbon nanotube film structure 16 includes at least two overlapped carbon nanotube films. The carbon nanotube film includes a plurality of successive carbon nanotubes joined end to end and aligned along the same direction. The at least two carbon nanotube films cross and overlap with each other. The number of the carbon nanotube films and the angle between the aligned directions of two adjacent carbon nanotube films is arbitrarily set.

The carbon nanotube film in the carbon nanotube film structure 16 can also carbon include a plurality carbon nanotubes. The carbon nanotubes are isotropic and uniformly arranged, disordered, and are entangled together.

The carbon nanotube film in the carbon nanotube film structure 16 can also include a plurality of carbon nanotubes. The carbon nanotubes are isotropically arranged, of arranged along a certain direction, or arranged along different directions.

It is to be understood that, the negative current collector 12 in the anode 10 of the lithium battery in the present embodiment is optional. In other embodiments, the anode 10 of the lithium battery may only include the first carbon nanotube structure 14. Due to the free-standing and stable film structure, the first carbon nanotube structure 14 can be used as the anode 10 in the lithium battery without the negative current collector 12.

In the present embodiment, a width of the carbon nanotube structure 14 is in the approximate range from 1 centimeter to 10 centimeters. A thickness of the first carbon nanotube structure 14 is in the approximate range from 1 micron to 2 millimeters. It is to be understood that, the size of the carbon nanotube structure 14 may be arbitrarily set. After a cutting step, a smaller size (e.g. a 8 mm × 8 mm) of carbon nanotube film can be formed for use as the carbon-nanotube-based anode in a miniature lithium battery.

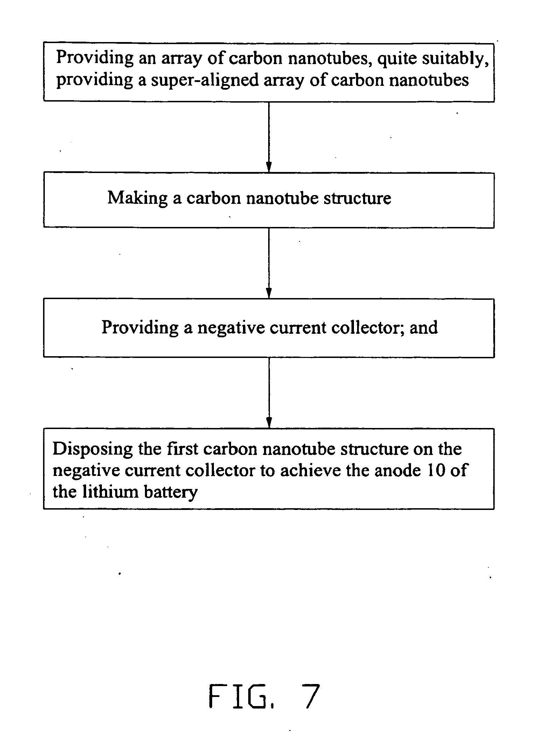

Referring to FIG. 7, a method for fabricating the anode 10 of the lithium battery includes the steps of: (a) providing an array of carbon nanotubes, quite suitably, providing a super-aligned array of carbon nanotubes; (b) making a first carbon nanotube structure 14; (c) providing a negative current collector 12; and (d) disposing the first carbon nanotube structure 14 on the negative current collector 12 to achieve the anode 10 of the lithium battery.

In step (a), a given super-aligned array of carbon nanotubes can be formed by the steps of: (a1) providing a substantially flat and smooth substrate; (a2) forming a catalyst layer on the substrate; (a3) annealing the substrate with the catalyst at a temperature in the approximate range of 700°C to 900°C in air for 30 to 90 minutes; (a4) heating the substrate with the catalyst at a temperature in the approximate range from 500°C to 740°C in a furnace with a protective gas therein; and (a5) supplying a carbon source gas to the furnace for 5 to 30 minutes and growing a super-aligned array of the carbon nanotubes from the substrate.

In step (a1), the substrate can be a P or N-type silicon wafer. Quite suitably, a 4-inch P-type silicon wafer is used as the substrate.

In step (a2), the catalyst can be made of iron (Fe), cobalt (Co), nickel (Ni), or any combination alloy thereof.

In step (a4), the protective gas can be made up of at least one of nitrogen (N₂), ammonia (NH₃), and a noble gas. In step (a5), the carbon source gas can be a hydrocarbon gas, such as ethylene (C₂H₄), methane (CH₄), acetylene (C₂H₂), ethane (C₂H₆), or any combination thereof.

The super-aligned array of carbon nanotubes can be in a height of above 100 microns and includes a plurality of carbon nanotubes parallel to each other and approximately perpendicular to the substrate. The super-aligned array of carbon nanotubes formed under the above conditions is essentially free of impurities, such as carbonaceous or residual catalyst particles. The carbon nanotubes in the super-aligned array are packed together closely by van der Waals attractive force.

In step (b), the first carbon nanotube structure 14 can be formed by the steps of: (b1) providing a pressing device; and (b2) pressing the array of carbon nanotubes to form a carbon nanotube film, and achieving a first carbon nanotube structure 14.

A certain pressure can, beneficially, be applied to the array of carbon nanotubes by the pressing device. In the process of pressing, the carbon nanotubes in the array of carbon nanotubes separate from the substrate and form the carbon nanotube film under pressure. The carbon nanotubes are substantially parallel to a surface of the carbon nanotube film.

In the present embodiment, the pressing device can, advantageously, be a pressure head. The pressure head has a smooth surface. It is to be understood that, the shape of the pressure head and the pressing direction can, opportunely, determine the direction of the carbon nanotubes arranged therein. Referring to FIG 2, when a planar pressure head is used to press the array of carbon nanotubes along the direction perpendicular to the substrate, a carbon nanotube film having a plurality of carbon nanotubes isotropically arranged can, advantageously, be obtained. Referring to FIG.3, when a roller-shaped pressure head is used to press the array of carbon nanotubes along a certain direction, a carbon nanotube film having a plurality of carbon nanotubes aligned along the certain direction is obtained. When a roller-shaped pressure head is used to press the array of carbon nanotubes along different directions, a carbon nanotube film having a plurality of carbon nanotubes aligned along different directions is obtained.

In step (b), the first carbon nanotube structure 14 can be formed by the steps of: (b1') separating the array of carbon nanotubes from the substrate to get a plurality of carbon nanotubes; (b2') adding the plurality of carbon nanotubes to a solvent to get a carbon nanotube floccule structure in the solvent; and (b3') separating the carbon nanotube floccule structure from the solvent, and shaping the separated carbon nanotube floccule structure into a carbon nanotube film, and thereby, achieving the first carbon nanotube structure 14.

In step (b1'), the array of carbon nanotubes is scraped off the substrate by a knife or other similar devices to obtain a plurality of carbon nanotubes. Such a raw material is, to a certain degree, able to maintain the segmented state of the carbon nanotubes. The length of the carbon nanotubes is above 10 microns.

In step (b2'), the solvent is selected from a group consisting of water and volatile organic solvent. After adding the plurality of carbon nanotubes to the solvent, a process of flocculating the carbon nanotubes can, suitably, be executed to create the carbon nanotube floccule structure. The process of flocculating the carbon nanotubes can, beneficially, be selected from the group consisting of ultrasonic dispersion of the carbon nanotubes and agitating the carbon nanotubes. In this embodiment ultrasonic dispersion is used to flocculate the solvent containing the carbon nanotubes for about 10~30 minutes. Due to the carbon nanotubes in the solvent having a large specific surface area and the tangled carbon nanotubes having a large van der Waals attractive force, the flocculated and tangled carbon nanotubes form a network structure (i.e., floccule structure).

In step (b3'), the process of separating the floccule structure from the solvent includes the substeps of: (b3'1) filtering out the solvent to obtain the carbon nanotube floccule structure; and (b3'2) drying the carbon nanotube floccule structure to obtain the separated carbon nanotube floccule structure.

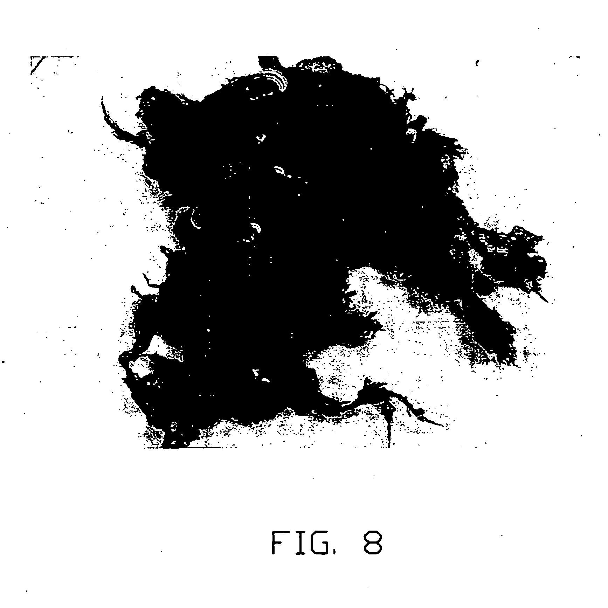

In step (b3'2), the carbon nanotube floccule structure can be disposed in room temperature for a period of time to dry the organic solvent therein. The time of drying can be selected according to practical needs. Referring to FIG 8, on the filter, the carbon nanotubes in the carbon nanotube floccule structure are tangled together.

In step (b3'), the process of shaping includes the substeps of: (b3'3) putting the separated carbon nanotube floccule structure into a container (not shown), and spreading the carbon nanotube floccule structure to form a predetermined structure; (b3'4) pressing the spread carbon nanotube floccule structure with a certain pressure to yield a desirable shape; and (b3'5) removing the residual solvent contained in the spread floccule structure to form the carbon nanotube film.

It is to be understood that the size of the spread floccule structure is, advantageously, used to control a thickness and a surface density of the first carbon nanotube structure 14. As such, the larger the area of the floccule structure, the less the thickness and density of the first carbon nanotube structure 14. Referring to FIG 3, in the embodiment, the thickness of the first carbon nanotube structure 14 is in the approximate range from 1 micron to 2 millimeters, and the width of the first carbon nanotube structure 14 can, opportunely, be in the approximate range from 1 centimeter to 10 centimeters.

Further, the step (b3') can be accomplished by a process of pumping and filtering the carbon nanotube floccule structure to obtain the carbon nanotube film. The process of pumping filtration includes the substeps of: (b3'1') providing a microporous membrane and an air-pumping funnel; (b3'2') filtering out the solvent from the flocculated carbon nanotubes through the microporous membrane using the air-pumping funnel; and (b3'3') air-pumping and drying the flocculated carbon nanotubes attached on the microporous membrane.

In step (b3'1'), the microporous membrane has a smooth surface. And a diameter of the micropores in the membrane is about 0.22 microns. The pumping filtration can exert air pressure on the floccule structure, thus, forming a uniform first carbon nanotube structure 14. Moreover, due to the microporous membrane having a smooth surface, the carbon nanotube film can be easily separated.

Through the flocculating step, the carbon nanotubes are tangled together by van der Walls attractive force to form a network structure/floccule structure. Thus, the first carbon nanotube structure 14 has good tensile strength. The first carbon nanotube structure 14 includes a plurality of micropores formed by the disordered carbon nanotubes. A diameter of the micropores is less than 100 micron. As such, a specific area of the first carbon nanotube structure 14 is extremely large. Additionally, the carbon nanotube film is essentially free of binder and includes a large amount of micropores. Accordingly, when the first carbon nanotube structure 14 is used in the lithium battery anode, the intercalation amount of lithium ions can be enhanced and the stability of the SEI layer formed in the first charge/discharge cycle can be improved by the special microporous structure of the first carbon nanotube structure 14. Further, the method for making the first carbon nanotube structure 14 is simple and can be used in mass production. A result of the production process of the method is that thickness and surface density of the first carbon nanotube structure 14 are controllable.

It will be apparent to those having ordinary skill in the field of the present invention that the size of the first carbon nanotube structure 14 can be arbitrarily set and depends on the actual needs of utilization (e.g. a miniature lithium battery). The first carbon nanotube structure 14 can be cut into smaller sizes in open air.

In step (b), the first carbon nanotube structure 14 can be formed by the steps of: (b1") pulling out at least two carbon nanotube films from the array of carbon nanotubes, by using a tool (e.g., adhesive tape or another tool allowing multiple carbon nanotubes to be gripped and pulled simultaneously); and (b2") providing a supporting member and disposing the carbon nanotube films to the supporting member along different directions, the carbon nanotube films overlapping with each other to achieve the first carbon nanotube structure 14.

In step (b1"), carbon nanotube films can, beneficially, be pulled out from the super-aligned array of carbon nanotubes by the substeps of: (b1"1) selecting a plurality of carbon nanotube segments having a predetermined width; (b1"2) pulling the carbon nanotube segments at an even/uniform speed to form one carbon nanotube film; (b1"3) repeating step (b1"1) and (b1 "2) to form a plurality of carbon nanotube films.

In step (b1"1), quite usefully, the carbon nanotube segments having a predetermined width can be selected by using a wide adhesive tape as the tool to contact the super-aligned array. In step (b1"2) the pulling direction is, usefully, substantially perpendicular to the growing direction of the super-aligned array of carbon nanotubes.

More specifically, during the pulling process, as the initial carbon nanotube segments are drawn out, other carbon nanotube segments are also drawn out end to end, due to the van der Waals attractive force between ends of the adjacent segments. This process of drawing ensures a successive carbon nanotube film can be formed. The carbon nanotubes of the carbon nanotube film are all substantially parallel to the pulling direction, and the carbon nanotube film produced in such manner is able to formed to have a selectable, predetermined width.

The width of the first carbon nanotube film depends on the size of the carbon nanotube array. The length of the first carbon nanotube film is arbitrary. In one useful embodiment, when the size of the substrate is 4 inches, (10,16 cm) the width of the first carbon nanotube film is in the approximate range from 1 centimeter to 10 centimeters, and the thickness of the first carbon nanotube film is in the approximate range from 0.01 to 100 microns.

In step (b), the first carbon nanotube structure 14 can be formed by the steps of: (b1"') making at least two carbon nanotube films; (b2"') overlapping at least two carbon nanotube films to achieve a carbon nanotube film structure 16; (b3"') dispersing a plurality of nanoscale tin oxide particles 18 in the carbon nanotube film structure 16 to form a composite film, then achieving a first carbon nanotube structure 14.

In step (b1"') the carbon nanotube film can be made by the method of a flocculating method, a pressing method or a pulling method.

The flocculating method for obtaining a carbon nanotube film includes the following steps: separating the array of carbon nanotubes from the substrate to get a plurality of carbon nanotubes; adding a plurality of carbon nanotubes to a solvent to create a carbon nanotube floccule structure in the solvent; separating the carbon nanotube floccule structure from the solvent; and shaping the separated carbon nanotube floccule structure into the carbon nanotube film. The carbon nanotube film made by the flocculating method includes a plurality of isotropic carbon nanotubes twisted with each other and disorderly distributed therein.

The pressing method for obtaining a carbon nanotube film includes the following steps: pressing the array of carbon nanotubes using a compressing apparatus, thereby forming a carbon nanotube film. The carbon nanotube film made by the pressing method includes a plurality of carbon nanotubes aligned along one or more directions.

In the present embodiment, the pulling method is adopted to make the carbon nanotube film.

In step (b2"'), after being pulled from the array of carbon nanotubes, the carbon nanotube films can, usefully, be overlapped with each other to form a carbon nanotube film structure 16. It is noted that because the carbon nanotubes in the super-aligned array in step (a) have a high purity and a high specific surface area, the carbon nanotube film is adhesive. As such, adjacent carbon nanotube films are combined by van de Waals attractive force to form a stable carbon nanotube film structure 16. The number of carbon nanotube films and the angle between the aligned directions of two adjacent carbon nanotube films may either be arbitrarily set or set according to actual needs/use. Quite usefully, in the present embodiment, the carbon nanotube film structure 16 includes 200 carbon nanotube films, and the angle between the aligned directions of two adjacent carbon nanotube films can, opportunely, be about 90°.

Quite suitably, an additional step (b4"') of treating the carbon nanotube film structure 16 in the anode 10 of the lithium battery with an organic solvent can, advantageously, be further provided after step (b2"').

In step (b4"'), the carbon nanotube film structure 16 can, beneficially, be treated by either of two methods: dropping an organic solvent from a dropper to soak an entire surface of the carbon nanotube film structure 16 or immersing the carbon nanotube film structure 16 into a container having an organic solvent therein. The organic solvent is volatilizable and can be selected from the group consisting of ethanol, methanol, acetone, dichloroethane, chloroform, and combinations thereof. Quite suitably, the organic solvent is ethanol. After being soaked by the organic solvent, the carbon nanotube segments in the carbon nanotube film structure 16 can, at least partially, shrink into carbon nanotube yarns due to the surface tension created by the organic solvent. Due to the decrease of the specific surface via bundling, the coefficient of friction of the carbon nanotube film structure 16 is reduced, but the carbon nanotube film structure 16 maintains high mechanical strength and toughness. As such, the carbon nanotube film structure 16 after the treating process can be used conveniently. Further, after being treated with the organic solvent, due to the shrinking of the carbon nanotube segments into carbon nanotube yarns, the parallel carbon nanotube segments in one layer are, relatively, far apart (especially compared to the initial layout of the carbon nanotube segments) from each other and are oriented cross-wise with the parallel carbon nanotube segments of adjacent layers. As such, the carbon nanotube film structure 16 having a microporous structure can thus be formed (i.e., the micropores are defined by the spacing/gaps between adjacent segments).

It is to be understood that the microporous structure is related to the layered number of the carbon nanotube film structure 16. The greater the number of layers that are formed in the carbon nanotube film structure 16, the greater the number of segments in the carbon nanotube film structure 16 will be. Accordingly, the spacing between adjacent segments and the diameter of the micropores will decrease.

It will be apparent to those having ordinary skill in the field of the present invention that the size of the carbon nanotube film structure 16 is arbitrarily and depends on the actual needs of utilization (e.g. a miniature lithium battery). A laser beam can be used to cut the carbon nanotube film structure 16 into smaller size in open air.

In step (b3"'), the first carbon nanotube structure 14 can, advantageously, be formed by the substeps of: (b3"'1) modifying the carbon nanotube film structure 16; (b3"'2) coating the modified carbon nanotube film structure 16 with a polymer; (b3"'3) covering the carbon nanotube film structure 16 with tin salt; (b3"'4) hydrolyzing the tin ion in the tin salt to form the nanoscale tin oxide particles 18; and (b3'"5) heating the carbon nanotube film structure 16 to eliminate the polymer, then achieving a first carbon nanotube structure 14.

In step (b3"'1), the carbon nanotube film structure 16 is disposed in a container with an inorganic acid therein at 90 °C to 140 °C for 4 to 6 hours. The ends of the carbon nanotubes are opened by the corrosion of the acid. Further, the inner wall and the outer wall of the carbon nanotubes are modified (i.e. surface modification of the carbon nanotubes). In the present embodiment, the carbon nanotube film structure 16 is disposed in a super-high pressure kettle with nitric acid therein at about 120 °C for about 5 hours.

In step (b3"'2), the modified carbon nanotube film structure 16 is immersed in a polymer solution for 5 to 7 hours. After coated with the polymer, the carbon nanotube film structure 16 is washed to eliminate the unstable and excess polymer thereon. Quite suitably, the carbon nanotube film structure 16 is immersed in a solution of polyvinyl pyrrolidone (PVP) in ethanol or acetone solvent.

In step (b3"'3), the polymer coated carbon nanotube film structure 16 is disposed in a container with a tin ion solution therein at 90 °C to 110 °C for 2 to 4 hours. Then the container is free cooled to room temperature. As such, a tin salt is formed on the surface of the polymer coated carbon nanotube film structure 16. The tin ion solution can, beneficially, be a solution of tin inorganic salt in water or tin organic compound in ethanol or acetone. The concentration of the tin ion in the solution can, opportunely, be in the approximate range from 3 mol/L to 10 mol/L. In the present embodiment, the polymer coated carbon nanotube film structure 16 is disposed in a super-high pressure kettle with a solution of dihydrate tin dichloride (SnCl₂·2H₂O) therein at about 100 °C for about 3 hours. After free cooled to room temperature, the excess and unstable tin salt on the carbon nanotube film structure 16 is eliminated by using acetone.

In step (b3"'4), the carbon nanotube film structure 16 is immersed in water. The tin ion in the tin salt can be hydrolyzed to form the nanoscale tin oxide particles 18 at room temperature. Further, the tin ion can be hydrolyzed rapidly at high temperature or in alkaline condition. In the present embodiment, quite suitably, the carbon nanotube film structure 16 is immersed in ammonia at 50 °C. As such, the nanoscale tin oxide particles 18 are formed and adsorbed to the walls of carbon nanotubes of the carbon nanotube film structure 16 or filled into the spacing/gaps in the carbon nanotube film structure 16.

In step (b3"'5), the polymer coated on the carbon nanotube film structure 16 decomposes at high temperature. Quite usefully, the carbon nanotube film structure 16 with the polymer coated thereon can be heated at 300 °C to 400 °C for 20 to 40 minutes in protective gas (e.g. nitrogen (N₂), or a noble gas). In the present embodiment, the carbon nanotube film structure 16 with the polymer coated thereon is heated at about 350 °C for about 30 minutes to achieve the first carbon nanotube structure 14.

In the step (d), the first carbon nanotube structure 14 can, suitably, be made to adhere to the surface of the negative current collector 12 by a binder.

It is to be understood that, when the first carbon nanotube structure 14 just includes a plurality of carbon nanotubes, the first carbon nanotube structure 14 is adhesive due to the large specific area thereof, thus, the first carbon nanotube structure 14 can be directly adhered to the negative current collector 12 by van der Waals attractive force.

In step (c), the negative current collector 12 can, beneficially, be a metal substrate. Quite suitably, the metal substrate is a copper sheet.

It is to be understood that, the negative current collector 12 in the anode 10 of the lithium battery in the present embodiment is optional. In other embodiments, the anode 10 of the lithium battery may only include the first carbon nanotube structure 14. Due to the free-standing and stable film structure, the first carbon nanotube structure 14 can be used as the anode 10 in the lithium battery without the negative current collector 12.

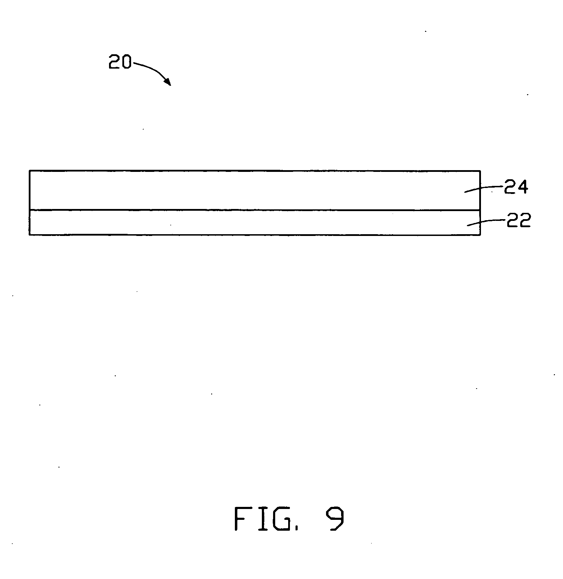

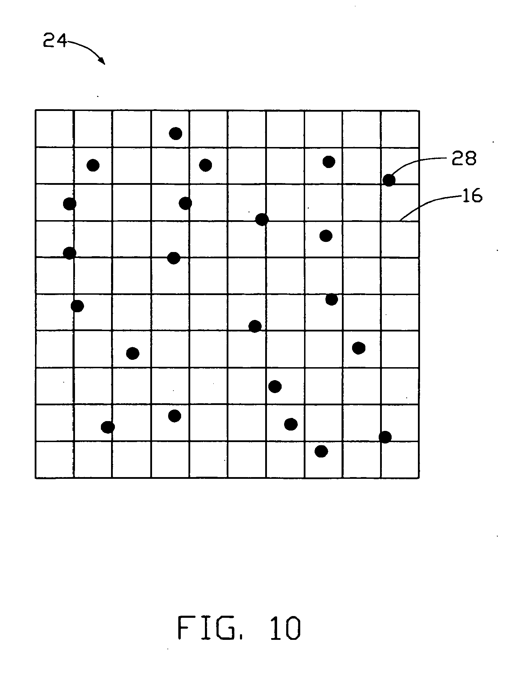

Referring to FIG. 9 and FIG 10, a cathode 20 in the present embodiment includes a positive current collector 22 and a second carbon nanotube structure 24 disposed on the positive current collector 22. The positive current collector 22 can, beneficially, be a metal substrate. Quite suitably, the metal substrate is a copper sheet. The second carbon nanotube structure 24 includes a carbon nanotube film structure 16 and a plurality of active material particles 28 dispersed in the carbon nanotube film structure 16.

The carbon nanotube film structure 16 includes at least two overlapped carbon nanotube films. Each carbon nanotube film includes a plurality of successive carbon nanotube segments joined end to end and are aligned in the same direction. The at least two carbon nanotube films cross and overlap with each other. The number of the carbon nanotube films and the angle between the aligned directions of the two adjacent carbon nanotube films is arbitrarily set.

In the present embodiment, a width of the carbon nanotube film structure 16 can, suitably, be in the approximate range from 1 centimeter to 10 centimeters, and a thickness of the carbon nanotube film structure 16 can, usefully, be in the approximate range from 0.01 micron to 100 microns. The carbon nanotube film structure 16 having a plurality of micropores defined by the spacing between adjacent carbon nanotube segments. The diameter of the resulting micropores can, beneficially, be less than 100 nanometers.

Referring to FIG. 5, quite suitably, the carbon nanotube film structure 16 includes 200 carbon nanotube films overlapped with each other. In the present embodiment, the width of the carbon nanotube film structure 16 is about 5 centimeters, and the thickness of the carbon nanotube film structure 16 is about 50 microns. The angle between the aligned directions of two adjacent carbon nanotube films is about 90°. The diameter of each of the micropores is about 60 nanometers.

The active material particles 28 are adsorbed to the wall of the carbon nanotubes by van der Waals attractive force or filled into the spacing between adjacent carbon nanotube segments of the carbon nanotube film structure 16. The size of the active material particles 28 can, opportunely, be nano-scale. Quite suitably, the diameter of the active material particles 28 is in the approximate range from 3 nanometers to 10 nanometers. In the present embodiment, the diameter of the active material particles 28 is about 6 nanometers.

The active material particles 28 can, opportunely, be made up of transition metal oxides and mixed transition metal oxides such as spinel type lithium manganese oxide (e.g. LiMn₂O₄), olivine type lithium iron phosphate (e.g. LiFePO₄), and layered type lithium cobalt oxide (e.g. LiCoO₂).

It is to be understood that, the positive current collector 22 in the cathode 20 of the lithium battery in the present embodiment is optional. In another embodiment, the cathode 20 of the lithium battery may only include the second carbon nanotube structure 24. Due to a plurality of carbon nanotube films being piled to form a self-sustained and stable film structure, the carbon nanotube film structure 16 can be used as the cathode 20 in the lithium battery without the positive current collector 22.

The carbon nanotube film structure 16 in the present embodiment has extremely large specific surface area (i.e. surface area per gram of solid material). As such, a relatively large amount of active material particles 28 can be adsorbed to the walls of the carbon nanotubes or filled into the micropores of the carbon nanotube structure 14. Accordingly, the charge/discharge capacity of the lithium battery using the above-described carbon-nanotube-based cathode can be improved. Further, because the active material particles are uniformly dispersed in the second carbon nanotube structure 24, the conductivity of the cathode can be enhanced.

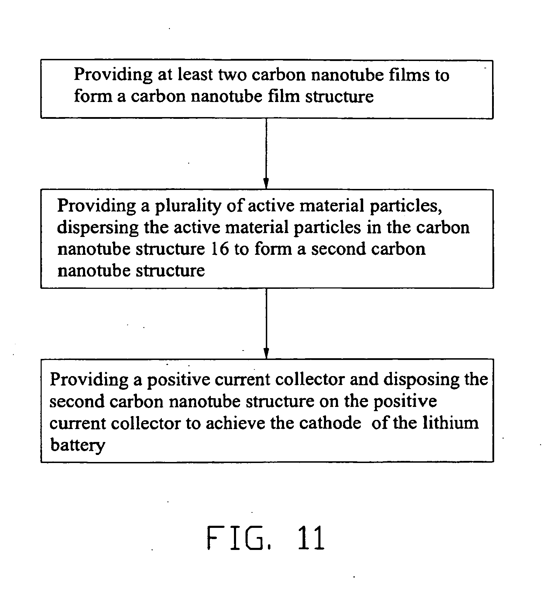

Referring to FIG 11, a method for fabricating the cathode 20 of the lithium battery includes the steps of: (e) providing at least two carbon nanotube films to form a carbon nanotube film structure 16; and (f) providing a plurality of active material particles 18, dispersing the active material particles 28 in the carbon nanotube structure 16 to form a second carbon nanotube structure 24; (g) providing a positive current collector 22 and disposing the second carbon nanotube structure 24 on the positive current collector 22 to achieve the cathode 20 of the lithium battery.

In step (f), the second carbon nanotube structure 14 can, advantageously, be formed by the substeps of: (f 1) providing a preform or a precursor of the active material; (f 2) immersing the carbon nanotube film structure 16 in the preform or the precursor of the active material to form the second carbon nanotube structure 24.

The active material can, opportunely, be transition metal oxides and mixed transition metal oxides such as spinel type lithium manganese oxide (e.g. LiMn₂O₄), olivine type lithium iron phosphate (e.g. LiFePO₄), and layered type lithium cobalt oxide (e.g. LiCoO₂).

In one useful embodiment of step (f), the preform of the active material can, suitably, be a mixture of the active material and a solvent. The solvent can, beneficially, be selected from the group consisting of water, ethanol, acetone, and combinations thereof. Quite usefully, the active material can be saturated in the solvent. The carbon nanotube film structure 16 can, advantageously, be immersed in the preform of the active material for a period of time until the solvent volatilized completely. Thus, the active material particles 28 can be uniformly dispersed in the carbon nanotube film structure 16.

In another embodiment of step (f), the preform can, usefully, be the active material in gas state at elevated temperature. The carbon nanotube film structure 16 can be directly disposed in the gas of the active material for 0.5 to 2 hours in a protective gas. After cooled to room temperature, the active material particles 28 can be formed and uniformly dispersed in the carbon nanotube film structure 16. The protective gas can, beneficially, be made up of at least one of nitrogen (N₂), ammonia (NH₃), and a noble gas.

In step (f), the precursor is a mixture of at least two reactants for preparing the active material. The reactants can, opportunely, be in gas state, liquid state, or mixed with a solvent. The carbon nanotube film structure 16 can, suitably, be immersed in the precursor for a period of time. After the reaction of the reactants, the active material particles 28 can be formed and uniformly dispersed in the carbon nanotube film structure 16. It is to be understood that the impurities formed by the reaction can be eliminated by a washing/filtration step.

In the present embodiment, the preform is a saturated solution of LiCoO₂ in water. The carbon nanotube film structure 16 is immersed in the preform for several hours until the water dried up. Thus, in the resulted second carbon nanotube structure 24, the LiCoO₂ particles are uniformly dispersed in the carbon nanotube film structure 16.

In step (g), the positive current collector 22 can, beneficially, be a metal substrate. Quite suitably, the metal substrate is a copper sheet.

It is to be understood that, in step (g), the positive current collector 22 in the cathode of the lithium battery is optional. In another embodiment, the cathode of the lithium battery may only include the second carbon nanotube structure 24. Due to a plurality of carbon nanotube films being overlapped to form a self-sustained and stable film structure, the second carbon nanotube structure 24 can be solely used as the cathode in the lithium battery without the positive current collector 22.

The cathode 20 of the present embodiment includes the carbon nanotube film structure 16 and the active material particles 28 uniformly dispersed therein. As such, the conductivity of the cathode can be enhanced. Further, the capacity of the lithium battery using the above-described cathode 20 can be improved due to the reduced resistance thereof. Additionally, the method for fabricating the above-described cathode 20 is simple and suitable for mass production.

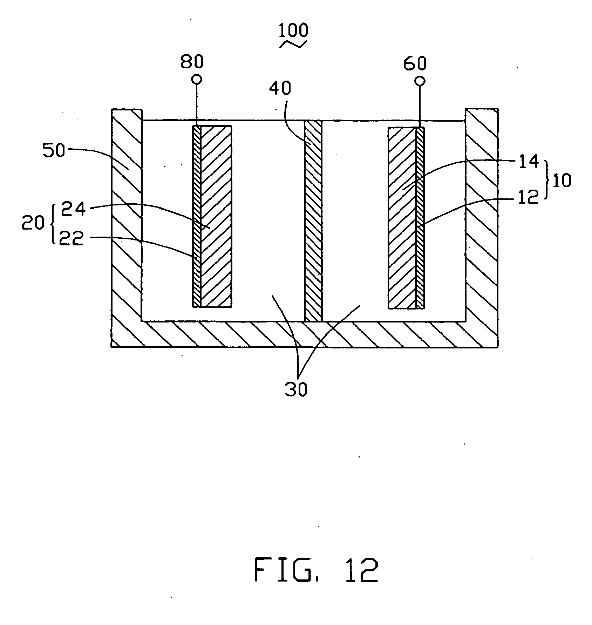

Referring to FIG 12, a lithium battery 100 includes a container 50, an anode 10, a cathode 20, an electrolyte 30, and a separator 40. The anode 10, the cathode 60, the electrolyte 30, and the separator 40 are disposed in the container 50. The container 50 is filled the electrolyte 30. The cathode 20 and the anode 10 are separated by the separator 40. The cathode 20 includes a positive current collector 22 and a second carbon nanotube structure 24 thereon. The second carbon nanotube structure 24 includes a carbon nanotube film structure 16 and a plurality of active material particles 28 dispersed in the carbon nanotube film structure 16. The anode 10 includes a negative current collector 12 and a first carbon nanotube structure 14 disposed thereon. A positive terminal 80 is disposed on the tops of the positive current collector 22 of the cathode 20. A negative terminal 60 is disposed on the tops of the negative current collector 12 of the anode 10.

The materials of the cathode 30, the separator 40, and the electrolyte 30 may be common materials known in the art. In the present embodiment, the first carbon nanotube structure 14 is a carbon nanotube film having a plurality of carbon nanotubes aligned along the certain direction. The carbon nanotube film structure 16 includes at least two overlapped carbon nanotube films. The active material particles 28 can, opportunely, be made up of transition metal oxides and mixed transition metal oxides such as spinel type lithium manganese oxide (e.g. LiMn₂O₄), olivine type lithium iron phosphate (e.g. LiFePO₄), and layered type lithium cobalt oxide (e.g. LiCoO₂). A weight of the anode is about 50 micrograms. The material of the separator is polyolefin.

Referring to table 1, the cycle performance of the carbon-nanotube-based anode of lithium battery in room temperature is shown. The anode of the lithium battery has high charge/discharge efficiency, high capacity, and good cycle performance. The discharge capacity of the first cycle of the lithium battery is above 700 mAh/g. The efficiency of the first cycle is above 140%. After 11 cycles, the capacity retention is above 90%.

**Table 1**

| Cycle Number | Charge Current (mAh) | Discharge Current (mAh) | Efficiency |
|---|---|---|---|
| 1 | 0 | 0.1094 | 0 |
| 2 | 0.0255 | 0.0382 | 149.8 |
| 3 | 0.0270 | 0.0321 | 118.5 |
| 4 | 0.0252 | 0.0293 | 116.2 |
| 5 | 0.0242 | 0.0277 | 114.1 |
| 6 | 0.0241 | 0.0271 | 112.3 |
| 7 | 0.0236 | 0.0264 | 111.6 |
| 8 | 0.0234 | 0.026 | 110.8 |
| 9 | 0.023 | 0.0259 | 110.3 |
| 10 | 0.0227 | 0.0257 | 109.1 |
| 11 | 0.0229 | 0.0259 | 109.6 |
| 12 | 0.0226 | 0.0254 | 108 |
| 13 | 0.0227 | 0 | 0 |

It will be apparent to those having ordinary skill in the field of the present invention that, the composition of the cathode and the electrolyte are not limited to the above-mentioned materials. The carbon nanotube film is essentially free of binder and includes a large amount of micropores. The intercalation amount of lithium ions can be enhanced due to the special microporous film structure of the anode. The stability of the SEI layer formed in the first cycle of charge and discharge can be improved due to the carbon nanotube film. As such, the electrolyte used in the lithium battery can be selected from a wider range of common electrolytes. Additionally, the carbon nanotubes are uniformly grown in the array of carbon nanotubes. As such, the grown carbon nanotubes are uniformly dispersed in the carbon nanotube film. The cathode 20 of the present embodiment includes the carbon nanotube film structure 16 and the active material particles 28 uniformly dispersed therein. As such, the conductivity of the cathode can be enhanced. Further, the capacity of the lithium battery using the above-described cathode 20 can be improved due to the reduced resistance thereof. Additionally, the method for fabricating the above-described cathode 20 and anode 10 is simple and suitable for mass production.

It is also to be understood that the above description and the claims drawn to a method may include some indication in reference to certain steps. However, the indication used is only to be viewed for identification purposes and not as a suggestion as to an order for the steps.

## Claims

1. A lithium battery, comprising:
an anode comprising a carbon nanotube film structure comprising at least two overlapped carbon nanotube films, wherein each carbon nanotube film comprises a plurality of successive carbon nanotubes joined end to end and aligned along a same direction;
a cathode;
a separator used to separate the anode from the cathode;
a container having the anode, the cathode, and the separator disposed therein; and an electrolyte filled in the container.

2. The lithium battery as claimed in claim 1, further comprising a negative current collector, and the carbon nanotube film structure is disposed on a surface of the current collector.

3. A lithium battery, comprising:
an anode;
a cathode comprising a carbon nanotube film structure comprising at least two overlapped carbon nanotube films, and a plurality of active material particles dispersed in the carbon nanotube film structure, wherein each carbon nanotube film comprises a plurality of successive carbon nanotubes joined end to end and aligned along a same direction;
a separator used to separate the anode from the cathode;
a container having the anode, the cathode, and the separator disposed therein; and an electrolyte filled in the container.

4. The lithium battery as claimed in claim 3, wherein a diameter of the active material particles is in the approximate range from 3 nanometers to 10 nanometers, and the active material particles can be made up of transition metal oxides and mixed transition metal oxides such as spinel type lithium manganese oxide, olivine type lithium iron phosphate, and layered type lithium cobalt oxide.

5. The lithium battery as claimed in claim 3, further comprising a positive current collector, and the carbon nanotube film structure is disposed on a surface of the positive current collector.

6. A method for fabricating an anode of a lithium battery, the method comprising the steps of:
(a) providing an array of carbon nanotubes;
(b) making a carbon nanotube film structure comprising at least two overlapped carbon nanotube films, wherein each carbon nanotube film comprises a plurality of successive carbon nanotubes joined end to end and aligned along a same direction;
(c) providing a negative current collector; and
(d) disposing a carbon nanotube film structure on the current collector, and thereby, achieving the anode of lithium battery.

7. The method as claimed in claim 6, wherein the step (b) further comprises the following steps of:
(b1") pulling out at least two carbon nanotube films from the array of carbon nanotubes, by using a tool;
(b2") providing a supporting member and disposing the at least two carbon nanotube films to the supporting member along different directions, the at least two carbon nanotube films overlapping with each other to achieve the carbon nanotube film structure.

8. The method as claimed in claim 7, wherein the step (b1") further comprises the following steps of:
(b1"1) selecting a plurality of carbon nanotube segments having a predetermined width;
(b1 "2) pulling the carbon nanotube segments at an even/uniform speed to form one carbon nanotube film;
(b1") repeating step (b1"1) and (b1"2) to form a plurality of carbon nanotube films.

9. The method as claimed in claim 7, wherein the carbon nanotube film structure has a plurality of micropores defined by the spacing between the adjacent carbon nanotube segments.

10. The lithium battery as claimed in claim 1, wherein the carbon nanotubes in the carbon nanotube film are joined end by end by van der waals attractive force.

## Patentansprüche

1. Eine Lithiumbatterie, die Folgendes beinhaltet:
eine Anode, die eine Kohlenstoffnanoröhrenfilmstruktur beinhaltet, die mindestens zwei überlappende Kohlenstoffnanoröhrenfilme beinhaltet, wobei jeder Kohlenstoffnanoröhrenfilm eine Vielzahl von aufeinanderfolgenden Kohlenstoffnanoröhren, die Ende an Ende aneinandergefügt sind und entlang einer gleichen Richtung ausgerichtet sind, beinhaltet;
eine Katode;
einen Separator, der verwendet wird, um die Anode von der Katode zu trennen;
einen Behälter, der darin angeordnet die Anode, die Katode und den Separator aufweist, und einen in den Behälter gefüllten Elektrolyt.

2. Lithiumbatterie gemäß Anspruch 1, die ferner einen negativen Stromkollektor beinhaltet, und wobei die Kohlenstoffnanoröhrenfilmstruktur auf einer Oberfläche des Stromkollektors angeordnet ist.

3. Eine Lithiumbatterie, die Folgendes beinhaltet:
eine Anode;
eine Katode, die eine Kohlenstoffnanoröhrenfilmstruktur beinhaltet, die mindestens zwei überlappende Kohlenstoffnanoröhrenfilme beinhaltet, und eine Vielzahl von Aktivmaterialpartikeln, die in der Kohlenstoffnanoröhrenfilmstruktur dispergiert sind, wobei jeder Kohlenstoffnanoröhrenfilm eine Vielzahl von aufeinanderfolgenden Kohlenstoffnanoröhren, die Ende an Ende aneinandergefügt sind und entlang einer gleichen Richtung ausgerichtet sind, beinhaltet;
einen Separator, der verwendet wird, um die Anode von der Katode zu trennen;
einen Behälter, der darin angeordnet die Anode, die Katode und den Separator aufweist, und einen in den Behälter gefüllten Elektrolyt.

4. Lithiumbatterie gemäß Anspruch 3, wobei ein Durchmesser der Aktivmaterialpartikel in dem ungefähren Bereich von 3 Nanometer bis 10 Nanometer liegt und die Aktivmaterialpartikel aus Übergangsmetalloxiden und gemischten Übergangsmetalloxiden wie etwa spinellartigem Lithiummanganoxid, olivinartigem Lithiumeisenphosphat und schichtartigem Lithiumcobaltoxid gefertigt sein können.

5. Lithiumbatterie gemäß Anspruch 3, die ferner einen positiven Stromkollektor beinhaltet, und wobei die Kohlenstoffnanoröhrenfilmstruktur auf einer Oberfläche des positiven Stromkollektors angeordnet ist.

6. Ein Verfahren zur Herstellung einer Anode einer Lithiumbatterie, wobei das Verfahren die folgenden Schritte beinhaltet:
(a) Bereitstellen einer Anordnung von Kohlenstoffnanoröhren;
(b) Fertigen einer Kohlenstoffnanoröhrenfilmstruktur, die mindestens zwei überlappende Kohlenstoffnanoröhrenfilme beinhaltet, wobei jeder Kohlenstoffnanoröhrenfilm eine Vielzahl von aufeinanderfolgenden Kohlenstoffnanoröhren, die Ende an Ende aneinandergefügt sind und entlang einer gleichen Richtung ausgerichtet sind, beinhaltet;
(c) Bereitstellen eines negativen Stromkollektors; und
(d) Anordnen einer Kohlenstoffnanoröhrenfilmstruktur auf dem Stromkollektor, und **dadurch** Erlangen der Anode der Lithiumbatterie.

7. Verfahren gemäß Anspruch 6, wobei der Schritt (b) ferner die folgenden Schritte beinhaltet:
(b1") Herausziehen von mindestens zwei Kohlenstoffnanoröhrenfilmen aus der Anordnung von Kohlenstoffnanoröhren durch Verwendung eines Werkzeugs;
(b2") Bereitstellen eines Stützelements und Anordnen der mindestens zwei Kohlenstoffnanoröhrenfilme auf dem Stützelement entlang unterschiedlichen Richtungen, wobei die mindestens zwei Kohlenstoffnanoröhrenfilme einander überlappen, um die Kohlenstoffnanoröhrenfilmstruktur zu erlangen.

8. Verfahren gemäß Anspruch 7, wobei der Schritt (b1") ferner die folgenden Schritte beinhaltet:
(b1"1) Auswählen einer Vielzahl von Kohlenstoffnanoröhrensegmenten mit einer vorbestimmten Breite;
(b1"2) Ziehen der Kohlenstoffnanoröhrensegmente mit einer gleichmäßigen/einheitlichen Geschwindigkeit, um einen Kohlenstoffnanoröhrenfilm zu bilden;
(b1"3) Wiederholen von Schritt (b1"1) und (b1"2), um eine Vielzahl von Kohlenstoffnanoröhrenfilmen zu bilden.

9. Verfahren gemäß Anspruch 7, wobei die Kohlenstoffnanoröhrenfilmstruktur eine Vielzahl von Mikroporen aufweist, die durch den Zwischenraum zwischen den angrenzenden Kohlenstoffnanoröhrensegmenten definiert werden.

10. Lithiumbatterie gemäß Anspruch 1, wobei die Kohlenstoffnanoröhren in dem Kohlenstoffnanoröhrenfilm durch Van-der-Waals-Anziehungskräfte Ende an Ende aneinandergefügt werden.

## Revendications

1. Une batterie au lithium, comprenant :
une anode comprenant une structure de films de nanotubes de carbone comprenant au moins deux films de nanotubes de carbone se chevauchant, chaque film de nanotubes de carbone comprenant une pluralité de nanotubes de carbone successifs joints bout à bout et alignés suivant une même direction ;
une cathode ;
un séparateur utilisé pour séparer l'anode de la cathode ;
un conteneur dans lequel sont disposés l'anode, la cathode et le séparateur ; et un électrolyte dont est rempli le conteneur.

2. La batterie au lithium telle que revendiquée dans la revendication 1, comprenant en outre un collecteur de courant négatif, la structure de films de nanotubes de carbone étant disposée sur une surface du collecteur de courant.

3. Une batterie au lithium, comprenant :
une anode ;
une cathode comprenant une structure de films de nanotubes de carbone comprenant au moins deux films de nanotubes de carbone se chevauchant, et une pluralité de particules de matériau actif dispersées dans la structure de films de nanotubes de carbone, chaque film de nanotubes de carbone comprenant une pluralité de nanotubes de carbone successifs joints bout à bout et alignés suivant une même direction ;
un séparateur utilisé pour séparer l'anode de la cathode ;
un conteneur dans lequel sont disposés l'anode, la cathode et le séparateur ; et un électrolyte dont est rempli le conteneur.

4. La batterie au lithium telle que revendiquée dans la revendication 3, dans laquelle un diamètre des particules de matériau actif est compris dans la plage approximative allant de 3 nanomètres à 10 nanomètres, les particules de matériau actif pouvant être composées d'oxydes de métaux de transition et d'oxydes de métaux de transition mélangés tels que de l'oxyde de manganèse lithié de type spinelle, du phosphate de fer lithié de type olivine, et de l'oxyde de cobalt lithié de type en couches.

5. La batterie au lithium telle que revendiquée dans la revendication 3, comprenant en outre un collecteur de courant positif, la structure de films de nanotubes de carbone étant disposée sur une surface du collecteur de courant positif.

6. Une méthode de fabrication d'une anode d'une batterie au lithium, la méthode comprenant les étapes suivantes :
(a) fournir une matrice de nanotubes de carbone ;
(b) créer une structure de films de nanotubes de carbone comprenant au moins deux films de nanotubes de carbone se chevauchant, chaque film de nanotubes de carbone comprenant une pluralité de nanotubes de carbone successifs joints bout à bout et alignés suivant une même direction ;
(c) fournir un collecteur de courant négatif ; et
(d) disposer une structure de films de nanotubes de carbone sur le collecteur de courant et, de ce fait, réaliser l'anode de batterie au lithium.

7. La méthode telle que revendiquée dans la revendication 6, dans laquelle l'étape (b) comprend en outre les étapes suivantes :
(b1") retirer au moins deux films de nanotubes de carbone de la matrice de nanotubes de carbone, à l'aide d'un outil ;
(b2") fournir un élément de support et disposer ces deux films de nanotubes de carbone sur l'élément de support suivant des directions différentes, ces deux films de nanotubes de carbone se chevauchant pour réaliser la structure de films de nanotubes de carbone.

8. La méthode telle que revendiquée dans la revendication 7, dans laquelle l'étape (b1") comprend en outre les étapes suivantes :
(b1"1) sélectionner une pluralité de segments de nanotubes de carbone ayant une largeur prédéterminée ;
(b1"2) étirer les segments de nanotubes de carbone à une vitesse égale / uniforme pour former un film de nanotubes de carbone ;
(b1"3) répéter l'étape (b1"1) et l'étape (b1"2) pour former une pluralité de films de nanotubes de carbone.

9. La méthode telle que revendiquée dans la revendication 7, dans laquelle la structure de films de nanotubes de carbone présente une pluralité de micropores définis par l'espacement entre les segments de nanotubes de carbone adjacents.

10. La batterie au lithium telle que revendiquée dans la revendication 1, dans laquelle les nanotubes de carbone dans le film de nanotubes de carbone sont joints bout à bout par la force d'attraction de Van der Waals.
